(19) Europäisches Patentamt
European Patent Office
Office européen des brevets

(11) **EP 1 862 488 B1**

(12) **EUROPEAN PATENT SPECIFICATION**

(45) Date of publication and mention
of the grant of the patent:
**21.07.2010 Bulletin 2010/29**

(51) Int Cl.:
***C08G 63/688*** (2006.01)   ***C08G 63/78*** (2006.01)
***D01F 6/86*** (2006.01)

(21) Application number: **06715058.1**

(22) Date of filing: **02.03.2006**

(86) International application number:
**PCT/JP2006/303949**

(87) International publication number:
**WO 2006/095627 (14.09.2006 Gazette 2006/37)**

(54) **NORMAL PRESSURE CATION DYEABLE POLYESTER, TEXTILE PRODUCT MADE FROM THE SAME, AND PROCESS FOR PRODUCTION OF THE SAME**

UNTER NORMALDRUCK KATIONISCH ANFÄRBBARER POLYESTER, DARAUS HERGESTELLTES TEXTILPRODUKT UND HERSTELLUNGSVERFAHREN DAFÜR

POLYESTER POUVANT ETRE TEINT PAR DES CATIONS SOUS PRESSION ORDINAIRE, PROCEDE POUR LE FABRIQUER ET PRODUIT TEXTILE L'UTILISANT

(84) Designated Contracting States:
**AT BE BG CH CY CZ DE DK EE ES FI FR GB GR HU IE IS IT LI LT LU LV MC NL PL PT RO SE SI SK TR**

(30) Priority: **07.03.2005 JP 2005062238**

(43) Date of publication of application:
**05.12.2007 Bulletin 2007/49**

(73) Proprietor: **KB Seiren, Ltd.**
**Sabae-shi**
**Fukui 916-0038 (JP)**

(72) Inventor: **KATSUMA, Keita**
**Yamaguchi 747-0823 (JP)**

(74) Representative: **Kuhnen & Wacker**
**Patent- und Rechtsanwaltsbüro**
**Prinz-Ludwig-Strasse 40A**
**85354 Freising (DE)**

(56) References cited:
**WO-A1-01/70848**      **JP-A- 07 133 343**
**JP-A- 2002 080 572**   **JP-A- 2002 284 863**
**JP-A- 2002 284 863**

Remarks:
The file contains technical information submitted after the application was filed and not included in this specification

**Description**

TECHNICAL FIELD

The present invention relates to a normal-pressure cation-dyeable polyester which is dyeable with a cationic dye at a normal pressure, and to a continuous production method therefor.

BACKGROUND ART

Polyethylene terephthalate fibers are generally dyeable only with disperse dyes and azoic dyes and, therefore, it is difficult to impart the polyethylene terephthalate fibers with clear and deep colors. To solve this problem, various polyester resin materials have been proposed.

For example, Patent Document 1 proposes a cation-dyeable polyester, which is obtained by copolymerizing a polyester with 2 to 3 mol% of an isophthalic acid component having a metal sulfonate group.

Further, Patent Document 2 proposes copolymerization with a polyethylene glycol having a molecular weight of not smaller than 200 to provide a dyeing facilitating effect. The polyethylene glycol has a plasticizing effect, thereby suppressing a viscosity increase which may otherwise occur due to the presence of the sulfonate group. This makes it possible to increase the polymerization degree of the polymer.

Further, copolymerization of a dicarboxylic acid of a linear hydrocarbon such as adipic acid or sebacic acid, or a glycol such as diethylene glycol, neopentyl glycol, cyclohexanedimethanol or 1,4-bis(β-hydroxyethoxy)benzene with an isophthalic acid having a sulfonate group is proposed to provide a resin material to be employed for suppressing reduction in light resistance and ensuring normal-pressure dyeability (Patent Document 3).

On one hand, exemplary methods for industrially producing polyesters include an ester interchange method (hereinafter referred to as DMT method) employing dimethyl terephthalate as described in Patent Document 3, and a direct polymerization method employing terephthalic acid as described in Patent Document 4. One example of the direct polymerization method is a direct continuous polymerization method in which oligomers are extracted and introduced into a separate polymerization tank after completion of esterification and polymerized in batches as described in Patent Document 5. These production methods are batch polymerization methods in which polymerization reactions are caused in batches.

On the other hand, the inventors of the present invention propose production of a normal-pressure cation-dyeable polyester having a stable quality by employing a direct continuous polymerization method as described in Patent Document 6.

   Patent Document 1: Japanese Examined Patent Publication No. SH034(1959)-10497
   Patent Document 2: Japanese Unexamined Patent Publication No. SH063(1988)-256716
   Patent Document 3: Japanese Unexamined Patent Publication No. SH062(1987)-89725
   Patent Document 4: Japanese Examined Patent Publication No. SH058(1983)-45971
   Patent Document 5: Japanese Unexamined Patent Publication No. SH062(1987)-146921
   Patent Document 6: Japanese Unexamined Patent Publication No. 2002-284863

DISCLOSURE OF THE INVENTION

PROBLEMS TO BE SOLVED BY THE INVENTION

However, polyester fibers produced from the resin of Patent Document 1 are dyeable only under high-temperature and high-pressure conditions. Therefore, the polyester fibers cannot be dyed after having been coknitted or cowoven with natural fibers, urethane fibers or the like. A resin obtained by copolymerization with a great amount of the sulfonate-group-containing isophthalic acid component can be satisfactorily dyed at a normal pressure at a temperature of about 100˚C without a carrier. In this case, however, the viscosity increasing effect due to the presence of the sulfonate group increases only the melt viscosity but does not increase the polymerization degree of the polymer. This presents problems such that a spinning filter pressure is increased at a higher rate and filament breakage frequently occurs, thereby deteriorating the spinnability.

The use of the polyester obtained by the copolymerization with the polyethylene glycol as described in Patent Document 2 suppresses the viscosity increasing effect attributable to the presence of the sulfonate group and increases the polymerization degree of the polyester, but the polyester has poorer light resistance.

The use of the polyesters described in Patent Documents 3 to 5 permits normal pressure dyeing, and improves the light resistance. However, these polyesters are generally produced in batches and, therefore, significantly differ in physical properties between batches. Further, the spinnability is significantly deteriorated, and the resulting filaments

2

are poorer in quality.

The normal-pressure cation-dyeable polyester described in Patent Document 6 has uniform physical properties, but dark-color light fastness is still unsatisfactory.

It is therefore an object of the present invention to solve the problems associated with the prior art to provide a normal-pressure cation-dyeable polyester which is stable in quality and excellent in dark- and pale-color light fastness when used for a textile product, and to provide a production method for the polyester.

MEANS FOR SOLVING THE PROBLEMS

According to a first aspect of the present invention, there is provided a normal-pressure cation-dyeable polyester which comprises: ethylene terephthalate as a major recurring unit; 2.0 to 3.0 mol% of an isophthalic acid component having a metal sulfonate group based on the total of acid components present in the polyester; and not less than 1.5 wt% and less than 4.0 wt% of a polyalkylene glycol having an average molecular weight of 150 to 400 based on the weight of the polyester; wherein diethylene glycol is present in a proportion of 4.5 to 6.5 mol% based on the total of glycol components; wherein a terminal carboxyl group concentration is 20 to 30 equivalents/ton; wherein the polyester has a melt index of 1.8 to 3.0 g/10 min at 290˚C.

According to a second aspect, the normal-pressure cation-dyeable polyester has a ratio of a maximum value $[\eta]$max to a minimum value $[\eta]$min of an intrinsic viscosity satisfying $1.0 \leq [\eta]max/[\eta]min \leq 1.02$. According to a third aspect, there is provided a textile product comprising a normal-pressure cation-dyeable polyester according to the first and second aspect.

According to a fourth aspect of the present invention, there is provided a continuous production method for continuously producing a normal-pressure cation-dyeable polyester according to the first aspect through a direct esterification reaction and polycondensation by employing terephthalic acid, ethylene glycol, an isophthalic acid component having a metal sulfonate group and a polyalkylene glycol as ingredients, the method comprising the steps of: slurrying dicarboxylic acid components and the ethylene glycol, adjusting pH of the resulting slurry to 4.5 to 5.5, and continuously supplying the slurry into a first esterification tank; controlling an in-tank molar ratio of the ethylene glycol to the dicarboxylic acid components including the terephthalic acid and the metal-sulfonate-group-containing isophthalic acid to 0.9 to 1.1 to provide an oligomer having an esterification ratio of 80 to 90%, and continuously supplying the oligomer into a second esterification tank; adding the polyalkylene glycol, and controlling the in-tank molar ratio to 1.1 to 1.2 to cause an esterification reaction; and sequentially introducing the resulting product into a polymerization tank, and causing a polymerization reaction at a reduced pressure.

According to a fifth aspect, a series of lot changes is continuously made without interruption of the steps in the normal-pressure cation-dyeable polyester continuous production method.

EFFECTS OF THE INVENTION

The inventive normal-pressure cation-dyeable polyester is stable in quality, and can be efficiently produced at lower costs. The inventive polyester can be easily dyed with a cationic dye at a normal pressure at a temperature of not higher than 100˚C without a carrier, and is excellent in dark- and pale-color light fastness. The inventive polyester can be melt-spun and post-treated under conditions close to those employed for an ordinary polyethylene terephthalate with excellent operability. Even if fibers of the inventive polyester are dyed after having been coknitted or cowoven with natural fibers, urethane fibers or the like for swimming wear and underwear applications, high quality textile products can be provided without degradation of the natural fibers and the urethane fibers.

BRIEF DESCRIPTION OF THE DRAWINGS

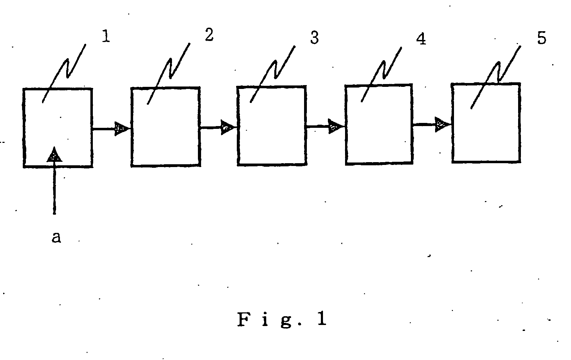

Fig. 1 is a schematic diagram showing an exemplary direct continuous polymerization method suitable for production of an inventive normal-pressure cation-dyeable polyester.

DESCRIPTION OF REFERENCE CHARACTERS

1: Slurrying tank
2: First esterification tank
3: Second esterification tank
4: Initial polymerization tank
5: Final polymerization tank

BEST MODE FOR CARRYING OUT THE INVENTION

Embodiments of the present invention will hereinafter be described in detail.

The present invention provides a normal-pressure cation-dyeable polyester having ethylene terephthalate as a major recurring unit.

The inventive polyester contains 2.0 to 3.0 mol% of an isophthalic acid component having a metal sulfonate group (hereinafter referred to as SIP component) based on the total of acid components present in the polyester. If the content of the SIP component is too low, it is impossible to provide sufficient normal-pressure cation-dyeability. If the content is too high, a viscosity increase and gelation are liable to occur due to charges of the SIP component in a melt-spinning process, thereby remarkably reducing the operability.

The SIP component may be added by copolymerization, mixing or any other method, but is preferably copolymerized for uniform dyeing of fibers.

Where the SIP component is copolymerized, the content is preferably in the aforementioned range for sufficient normal-pressure cation-dyeability, for prevention of the viscosity increase and the gelation attributable to the charges of the SIP component in the melt-spinning process, and for the operability.

Examples of the SIP component according to the present invention include dimethyl 5-metal-sulfoisophthalate (hereinafter referred to as SIPM) and a compound obtained by esterification of two methyl groups thereof with ethylene glycol (hereinafter referred to as SIPE). If a great amount of the SIPM is supplied into a slurry tank, the physical properties of the resulting slurry are deteriorated. Therefore, the SIPE is more preferable. Examples of a metal contained in the SIP component include sodium, potassium and lithium, among which sodium is most preferable.

The inventive polyester contains a polyalkylene glycol having an average molecular weight of 150 to 400.

If the molecular weight is less than 150, the resulting polyester is liable to experience a hydrolysis reaction in the melt-spinning process and hence have a lower melting point and a lower glass transition temperature. Therefore, pellets of the polyester are liable to be melt-bonded to each other, and chalking is liable to occur in a preliminary filament twisting process. If the molecular weight is greater than 600, the light fastness and the heat resistance of the polymer are deteriorated.

The polyalkylene glycol is represented by a general formula of $HO(C_nH_{2n}O)_mH$ (wherein n and m are positive integers), and polyethylene glycol defined by n=2 in the formula (hereinafter referred to as PEG) is generally used and most preferable.

Here, the polyalkylene glycol may be added by copolymerization, blending in a polymerization step, blending in a kneading step or any other method, but is preferably copolymerized for a stable post-treatment process.

The content of the polyalkylene glycol should be not less than 1.5 wt% and less than 4.0 wt%, preferably 2 to 3 wt%, based on the weight of the polyester. If the content is less than 1.5 wt%, the normal-pressure cation-dyeability is unsatisfactory, and the spinnability is liable to be deteriorated because the viscosity increase and the gelation due to the charges of the SIP component cannot be suppressed. On the other hand, if the content is not less than 4 wt%, the normal-pressure cation-dyeability is improved, but the heat resistance of the polyester is reduced to deteriorate the color tone of the polyester. Further, the glass transition temperature is reduced, whereby the pellets of the polyester are liable to be melt-bonded to each other. Where the polyalkylene glycol is copolymerized, the content is preferably in the aforementioned range.

The inventive polyester should contain 4.5 to 6.5 mol%, preferably 5 to 6%, of diethylene glycol (hereinafter referred to as DEG) based on the total of glycol components present in the polyester. Most of the DEG is produced as a by-product during an esterification reaction. If the content of the DEG is less than 4.5 mol%, the normal-pressure cation-dyeability is deteriorated. If the content is greater than 6.5 mol%, the heat resistance and the oxidation resistance of the polyester and the color tone of the polyester are deteriorated, and the melt-spinnability is significantly deteriorated.

Further, the terminal carboxyl group concentration of the inventive polyester is 20 to 30 equivalents/ton. In a system in which several types of modifiers are copolymerized as in the case of the normal-pressure cation-dyeable polyester, the heat resistance is generally deteriorated. If the terminal carboxyl group concentration falls within this range, the color tone of the polyester and the heat resistance in the spinning process and the post-treatment process are satisfactory.

The ratio of a maximum value [η]max to a minimum value [η]min of the intrinsic viscosity of the inventive polyester is preferably 1.0 ≤ [η]max/[η]min ≤ 1.02, more preferably between 1.0 and 1.01. If [η]max/[η]min falls within the aforementioned range, the spinnability and the dyeing uniformity are improved.

The melt index (MI) of the inventive polyester as measured when the polyester is melt-extruded at 290°C is set to 1.8 to 3.0 g/10 min. If the melt index falls within this range, more excellent spinnability is ensured during spinning of high multi-filaments each having a smaller single filament fineness and profile filaments. Further, a normal-pressure cation-dyeable yarn can be produced, which is highly strong and has stretchability suitable for weaving.

The inventive polyester may contain modifiers such as a light resistant agent, a heat resistant agent and a delustering agent for improving the physical properties thereof.

The inventive normal-pressure cation-dyeable polyester described above in detail contains the SIP component, the polyalkylene glycol component and the DEG component in proper proportions, and can be stably spun into filaments in the melt-spinning process. Therefore, the filaments are uniformly dyeable with a cationic dye, and excellent in dark- and pale-color light fastness.

In the spinning of the polyester, the spinning filter pressure increasing rate is lower, and the spinnability is excellent. Further, the polyester is resistant to thermal aging. Therefore, where the polyester is used as a spinning material, filaments can be produced as having a stable quality at a higher spinning productivity.

Filaments produced by employing the polyester as a spinning material and dyed with a cationic dye at a normal pressure are excellent in dark- and pale-color light fastness and less expensive. Since the filaments can be dyed at a normal pressure, a fabric produced by employing the filaments in combination with less heat-resistant fibers such as natural fibers or urethane fibers can be dyed. Therefore, a high quality textile product can be efficiently produced.

Next, a method suitable for the production of the inventive polyester will be described in detail with reference to the drawing.

Fig. 1 is a schematic diagram illustrating a process according to one embodiment of the present invention.

First, terephthalic acid and a glycol are slurried in a slurrying tank 1, and then a metal-sulfonate-containing isophthalic acid compound (a) containing an SIP component is supplied to the tank 1 to provide a slurry.

Thereafter, the slurry is continuously supplied into a first esterification tank 2 for an esterification reaction to provide oligomers, which are sequentially supplied into a second esterification tank 3. Subsequently, the oligomers are continuously supplied into an initial polymerization tank 4 and then into a final polymerization tank 5, whereby the oligomers continuously experience a polymerization reaction to a predetermined polymerization degree in vacuum.

As described above, the SIP component is preferably added to the slurry containing terephthalic acid and ethylene glycol as major components in the slurrying tank 1. The addition of the SIP component in the slurrying tank 1 provides a so-called random copolymer in which the SIP component is evenly distributed in a molecule chain of the polyester, thereby permitting uniform dying with a basic dye. Further, where the normal-pressure cation-dyeable polyester is spun, the filter pressure increase is suppressed which may otherwise occur due to gelation caused by the SIP component. Therefore, the cycle of the replacement of a spinneret can be prolonged.

In the present invention, the production is preferably achieved by direct continuous polymerization as described above. The continuous polymerization method makes it easy to add the SIP component in the aforesaid timing.

Prior-art methods for producing cation-dyeable polyesters as in the present invention are roughly classified into two categories: (1) the DMT method described in Patent Document 3; and (2) the direct polymerization method described in Patent Document 4. The former method is problematic in recovery and handling of methanol resulting from ester interchange between dimethyl terephthalate and ethylene glycol, and requires a greater amount of ethylene glycol for the reaction. Therefore, the latter direct polymerization method is predominant in recent years.

In the case of the DMT method, a preliminarily adding method in which the SIP component and DMT are simultaneously added may be employed, thereby permitting uniform reaction of the SIP component. However, the DMT method is not suitable for industrial production because of the aforesaid reasons and poorer color tone of the resulting polyester.

The direct polymerization method is suitable for industrial production. In the direct esterification method, an esterification reaction is generally allowed to proceed while the slurry is additionally supplied to the esterification tank in which a seed prepolymer is present. In this case, if the SIP component is added in the slurrying tank, the amount of the DEG produced as a by-product is significantly increased due to the acidification effect of the SIP component to reach a level not less than 10 mol% based on the total of the acid components present in the slurrying tank, thereby deteriorating the heat resistance of the polyester. In the direct polymerization method, therefore, it is a common practice to supply the SIP component into the polymerization tank immediately before the start of the polycondensation reaction after the prepolymer obtained through the esterification reaction is transferred into the polymerization tank.

In the present invention, on the other hand, the direct continuous polymerization method in which the SIP component is supplied into the slurrying tank 1 is preferably employed out of the direct polymerization method. The inventive method can easily control the amount of the DEG as will be described later.

When the SIP component is supplied into the slurrying tank 1, the amount of the DEG produced as a by-product is significantly increased. Therefore, the pH of the slurry is preferably adjusted to 4.5 to 5.5. More specifically, an alkali such as sodium acetate trihydrate, manganese acetate tetrahydrate, sodium hydroxide, potassium hydroxide or tetraethylammonium hydroxide is properly added for the adjustment.

If the pH of the slurry is lower than 4.5, an increased amount of the DEG produced as a by-product is liable to deteriorate the color tone of the polyester and reduce the melting point and the glass transition temperature of the polyester to deteriorate the heat resistance of the polyester. If the pH is adjusted to higher than 5.5, the alkali is added in an increased amount, and acts as foreign matter to deteriorate the spinnability.

Further, the in-tank molar ratio of the ethylene glycol to dicarboxylic acid components in the first esterification tank 2 is preferably controlled to 0.9 to 1.1. If the molar ratio falls within this range, the amount of the DEG produced as a by-product can be easily set within the range specified in the present invention during the esterification reaction.

The internal pressure of the first esterification tank 2 is not particularly limited, but is preferably set at a gage pressure of 68. 7 to 147.1 kPa, more preferably 88.3 to 117.7 kPa. If the internal pressure falls within this range, water generated by the reaction with the ethylene glycol can be stably separated, so that the amount of the DEG produced as a by-product can be easily set within the range specified in the present invention.

In the present invention, the oligomers to be continuously supplied into the second esterification tank 3 in which the polyalkylene glycol is added preferably has an esterification ratio of 80 to 90%, more preferably 82 to 87%, in the first esterification tank 2 in terms of the heat resistance and the spinnability of the polyester.

That is, if the esterification ratio is less than 80%, a thermal load in the second esterification tank 3 in which the reaction occurs at a normal pressure is increased. Therefore, the reaction system is not stabilized, and the terminal carboxyl group concentration of the polyester to be described later falls outside the concentration range specified for the inventive polyester, thereby deteriorating the heat resistance of the polyester. If the esterification ratio is greater than 90%, the polyalkylene glycol is locally present in the polyester molecule chain during the reaction, or is not completely copolymerized but dispersed in a blended state. Therefore, the heat resistance and hence the spinnability of the polyester are liable to be deteriorated, and chalking is liable to occur due to bleeding of the polyalkylene glycol when the resulting polyester filaments are post-treated.

In order to control the terminal carboxyl group concentration within the range specified in the present invention, the in-tank molar ratio of the ethylene glycol to the dicarboxylic acid components in the second esterification tank 3 is preferably limited to 1.1 to 1.2, more preferably 1.12 to 1.17.

If the molar ratio is less than 1.1, a smaller amount of the ethylene glycol is present in the polymerization reaction, so that the amount of the terminal carboxyl group is liable to fall outside the range specified in the present invention. If the molar ratio is greater than 1.17, the amount of the terminal carboxyl group is liable to be lower than the range specified in the present invention. Further, the amount of ethylene glycol generated in the polymerization process is increased. Therefore, the aforementioned range is preferred from both an economic viewpoint and an environmental viewpoint.

When the inventive polyester is produced by the direct continuous polymerization method, the intrinsic viscosity ratio of the inventive polyester can be easily controlled by: (1) limiting pH in the slurrying tank 1; (2) controlling the molar ratio and the internal pressure in the first esterification tank; (3) limiting the molar ratio in the second esterification tank; (4) setting the SIP component adding position and the polyalkylene glycol adding position at the aforementioned positions; and (5) setting the temperature of the polyester polymerization reaction at not higher than 280˚C.

Modifiers such as a light resistant agent, a heat resistant agent and a delustering agent may be added to the inventive normal-pressure cation-dyeable polyester for improvement of the physical properties. These additives may be added at any stage of the production process, but are preferably added in the form of an ethylene glycol dispersion in the slurring step for prevention of coagulation.

The direct continuous polymerization method is employed for production of the inventive normal-pressure cation-dyeable polyester. In this case, it is preferred in terms of costs that a previous production lot is continuously changed to a production lot for the normal-pressure cation-dyeable polyester and, after the production of the normal-pressure cation-dyeable polyester, the production lot is continuously changed to the next production lot.

Where the process is once stopped, the amount of waste to be discharged is increased, and costs and labor are required for cleaning the polymerization tanks. Therefore, where the lot changes are continuously made, process variations in the system are preferably minimized. To this end, the concentrations of the metal-sulfonate-containing isophthalic acid and the polyalkylene glycol are controlled, and the reaction temperature, the pressure and the in-system retention time are controlled.

EXAMPLES

The present invention will hereinafter be described in greater detail by way of examples thereof. In the following examples, values were measured by the following methods.

(1) Intrinsic Viscosity [η]

Specimens for measurement of the intrinsic viscosity [η] of polymer chips were sampled in the following manner. Polymer chips produced by the continuous polymerization method were sampled at proper time intervals, and employed as samples. Polymer chips produced by a batch polymerization method were sampled for each batch after the start of extrusion of the polymer, immediately before completion of the extrusion, and during the extrusion, and employed as samples. The intrinsic viscosity of each of the samples was measured in a solvent mixture of phenol/tetrachloroethane = 6/4 (weight ratio) at 20˚C by the Uberode method. The number of samples for each case was five. The highest one of the intrinsic viscosities of the five samples was defined as [η]max, and the lowest one of the intrinsic viscosities of the five samples was defined as [η]min. Then, [η] max/ [η] min was calculated from the measurement results, and employed as an index of the intrinsic viscosity unevenness of the polymer.

(2) Average Molecular Weight of Polyalkylene Glycol

The hydroxyl value of a polyalkylene glycol was measured by a pyridine-acetic anhydride method specified by JIS K-0070, and the average molecular weight of the polyalkylene glycol was calculated by an ordinary method.

(3) Diethylene Glycol (DEG) Amount

Polyester pellets were pulverized, saponified in a potassium hydroxide-methanol solution, hydrolyzed with pure water, neutralized with terephthalic acid, and analyzed by gas chromatography, and the content of diethylene glycol was determined by an internal standard method. Then, the mole percentage of the DEG in the polymer was calculated from the following expression:

$$DEG \ (mol\%) = 100 \times DEG \ mole \ number/(DEG \ mole \ number + EG \ mole \ number)$$

(4) Terminal Carboxyl Group Concentration (COOH)

Polyester pellets were pulverized and dissolved in hot benzyl alcohol. After addition of chloroform, the terminal carboxyl group concentration was determined by titration of an acid component with a 1/50 N potassium hydroxide-benzyl alcohol solution, and expressed in equivalent per ton of the polyester.

(5) Melt Index (MI).

Polyester pellets were dried in vacuum at 150˚C for five hours to a moisture content of 20 to 30 ppm. Then, the weight of the polyester melt and extruded from a 0.5-mm $\phi$ orifice at 290˚C with a load of 2.16kg was measured with the use of a melt indexer produced by Toyo Seiki Kogyo Co. , Ltd. , and converted to an extrusion weight per 10 minutes.

(6) Color Tone of Polymer

The color of polyester pellets was measured by a color measurement colorimeter produced by Nippon Denshoku Kogyo Co., Ltd., and a value Lab was calculated. Polyester pellets having a value <u>b</u> less than 6 were symbolized by ○, and polyester pellets having a value not less than 6 were symbolized by ×.

(7) Spinnability

The resulting normal-pressure cation-dyeable polyester was spun into 44 dtex/36f filaments by a direct spin-drawing method, and the spinnability was rated as ○, Δ and × in descending order based on the spinning filter pressure increase rate and the number of times of filament breakage.

(8) Dyeability with Cationic Dye

Dyeability with a cationic dye was determined by dyeing a polyester in a dye solution containing 3.0 %owf of Kayacryl Blue GSL-ED (Nippon Kayaku Co., Ltd.) and 0.2 g/l of acetic acid at a bath ratio of 1:50 at a boiling point (98˚C) at a normal pressure for 60 minutes, and the absorbance of the dye solution was measured before and after the dyeing. Then, an exhaustion dyeing percentage (%) was calculated from the following expression. A polyester having an exhaustion dyeing percentage of not less than 90% was symbolized by ◎, a polyester having an exhaustion dyeing percentage of not less than 80% and less than 90% was symbolized by ○, a polyester having an exhaustion dyeing percentage of not less than 70% and less than 80% was symbolized by Δ, and a polyester having an exhaustion dyeing percentage of less than 70% was symbolized by ×.

$$\text{Exhaustion dyeing percentage (\%)} = 100 \times \text{(Pre-dying Absorbance}$$

$$-\text{ Post-dyeing Absorbance)/Pre-dyeing Absorbance}$$

(9) Light Fastness

Tubular knitted samples were prepared from a 44 dtex/36f normal-pressure cation-dyeable yarn, dyed in dye solutions respectively containing Kayacryl Blue GSL-ED (Nippon Kayaku Co., Ltd.) in concentrations of 0.2 %owf and 1.0 %owf at a bath ratio of 1:30 at 98°C at a normal pressure for 30 minutes, rinsed with water, dried, and heat-set at 160°C for 1 minute. Then, the samples were respectively subjected to a light fastness test in a 63°C environment for 20 hours and for 40 hours with the use of a fade meter, and compared with a blank sample for comparison of fading states. For evaluation, a sample having no difference from the blank sample after the 20-hour light fastness test was rated as not lower than the third grade, and a sample having no difference from the blank sample after the 40-hour light fastness test was rated as not lower than the fourth grade. A sample rated as lower than the third grade was symbolized by ×, a sample rated as not lower than the third grade and lower than the fourth grade was symbolized by ○, and a sample rated as not lower than the fourth grade was symbolized by ◎.

(10) Breaking Strength and Breaking Extension

The breaking strength and the breaking extension were determined at a constant stretching rate of 20 cm/min by employing a 20-cm long sample in conformity with JIS L-1013 by means of an autograph tensile tester AGS-1KNG produced by Shimadzu Corporation.

(11) Evaluation of Filament Breaking Strength

A sample having a breaking strength measurement value of not less than 3.0 cN/dtex as determined by the test specified by the item (10) was symbolized by ○, and a sample having a breaking strength measurement value of less than 3.0 cN/dtex was symbolized by △.

(12) High Multi-Filament Spinnability

The resulting normal-pressure cation-dyeable polyester was spun into 33 dtex/36f filaments by a direct spin-drawing method, and the spinnability was rated as ○, △ and × in descending order based on the spinning filter pressure increase rate and the number of times of filament breakage.

(13) Profile Filament Spinnability

The resulting normal-pressure cation-dyeable polyester was spun into 44 dtex/36f triangle profile filaments by a direct spin-drawing method, and the spinnability was rated as ○, △ and × in descending order based on the spinning filter pressure increase rate and the number of times of filament breakage.

[Example 1]

Terephthalic acid, ethylene glycol and SIPE (2.5 mol% based on the total of acid components) were supplied into the slurrying tank 1, and 320 ppm of titanium dioxide as a delustering agent, 45 ppm of trimethyl phosphate and 800 ppm of sodium acetate trihydrate based on the amount of a polymer were added to the resulting slurry. After the pH of the resulting slurry was adjusted to 5.0, the slurry was continuously supplied into the first esterification tank 2, and subjected to a pressurized reaction at a reaction temperature of 270°C at a gage pressure of 88.2 kPa with the molar ratio of the ethylene glycol to dicarboxylic acid components being adjusted to 1.0 to provide a prepolymer having an esterification ratio of 85%. Then, the prepolymer was continuously supplied into the second esterification tank 3, and 3 wt% of polyethylene glycol having a molecular weight of 200 based on the amount of the polymer was continuously added to the prepolymer. Then, 0.2 wt% of a hindered phenol antioxidant IRGANOX (registered trade mark) 245 (produced by Ciba Geigy Corporation) and 270 ppm of antimony trioxide dissolved in ethylene glycol were added to the prepolymer with the molar ratio of the ethylene glycol being adjustedto 1. 13 in the second esterification tank, and the resulting mixture was subjected to an esterification reaction at a normal pressure. Thereafter, the resulting product was continuously transferred to the initial polymerization tank 4 and then to the final polymerization tank 5, and continuously subjected to a polymerization reaction at a reaction temperature of 280°C. Thus, a polyester polymer having a melt viscosity of 250 Pa·s as measured at 280°C by a capillary viscometer was provided. A retention time from the esterification to the completion of the polymerization reaction was 5. 6 hours, and the production was carried out at a production rate of 38 ton/day. The polyester polymer had an intrinsic viscosity ratio [η] max/ [η] min of 1.005 and a melt index value of 2.4 g/10 min at 290°C.

Pellets were prepared from the polyester polymer, dried, and 44 dtex/36f normal-pressure cation-dyeable filaments were prepared from the pellets by a direct spin-drawing method. A tubular knitted fabric was prepared from the normal-pressure cation-dyeable filaments, and dyed with a cationic dye at 98°C in the aforementioned manner. The exhaustion dyeing percentage and the light fastness of the tubular knitted fabric were measured. The normal-pressure cation-dyeable filaments were satisfactory with a breaking strength of 3.20 cN/dtex and a breaking extension of 34.3%. The characteristic properties are shown in Table 1.

[Examples 2 to 14 and Comparative Examples 1 to 10]

Polyesters were prepared through the polycondensation reaction in substantially the same manner as in Example 1, except that the amount of the added SIPE, the amount and the molecular weight of the added polyalkylene glycol, the amount of the DEG and the amount of the terminal carboxyl group were changed as shown in Tables 1 and 2. The characteristic properties of the polyesters thus prepared are shown in Tables 1 and 2.

[Table 1]

| | Example | | | | | | | | | | | | | |
|---|---|---|---|---|---|---|---|---|---|---|---|---|---|---|
| | 1 | 2 | 3 | 4 | 5 | 6 | 7 | 8 | 9 | 10 | 11 | 12 | 13 | 14 |
| SIP component (mol%) | 2.5 | 2.5 | 2.5 | 2.5 | 2.5 | 2.5 | 2.5 | 2.5 | 2.0 | 3.0 | 2.5 | 2.5 | 2.5 | 2.5 |
| PAG component (wt%) | 3.0 | 3.0 | 1.5 | 2.0 | 2.5 | 3.7 | 3.0 | 3.0 | 3.0 | 3.0 | 3.0 | 3.0 | 3.0 | 3.0 |
| Molecular weight | 200 | 400 | 200 | 200 | 200 | 200 | 150 | 600 | 200 | 200 | 200 | 200 | 200 | 200 |
| DEG (mol%) | 5.9 | 5.7 | 5.8 | 5.8 | 5.8 | 5.7 | 5.5 | 5.2 | 4.8 | 5.8 | 4.5 | 6.5 | 5.6 | 5.3 |
| COOH (equivalent/ton) | 25 | 26 | 25 | 25 | 25 | 28 | 28 | 27 | 25 | 24 | 24 | 28 | 20 | 30 |
| Polymer color tone | ○ | ○ | ○ | ○ | ○ | ○ | ○ | ○ | ○ | ○ | ○ | ○ | ○ | ○ |
| Spinnability | ○ | ○ | Δ | ○ | ○ | ○ | Δ | ○ | ○ | Δ | Δ | ○ | ○ | ○ |
| Exhaustion dyeing property | ◎ | ◎ | ○ | ○ | ◎ | ◎ | ○ | ◎ | ○ | ◎ | Δ | ◎ | ◎ | ◎ |
| Light fastness | ◎ | ○ | ○ | ◎ | ◎ | ○ | ◎ | ○ | ◎ | ○ | ◎ | ○ | ◎ | ◎ |

[Table 2]

| | Comparative Example | | | | | | | | | |
|---|---|---|---|---|---|---|---|---|---|---|
| | 1 | 2 | 3 | 4 | 5 | 6 | 7 | 8 | 9 | 10 |
| SIP component (mol%) | 1.8 | 3.5 | 2.5 | 2.5 | 2.5 | 2.5 | 2.5 | 2.5 | 2.5 | 2.5 |
| PAG component (wt%) | 3.0 | 3.0 | 1.3 | 5.0 | 3.0 | 3.0 | 3.0 | 3.0 | 3.0 | 3.0 |
| (Molecular weight) | 200 | 200 | 200 | 200 | 110 | 800 | 200 | 200 | 200 | 200 |
| DEG (mol%) | 4 . 7 | 6.3 | 6.1 | 5.7 | 6.4 | 5.8 | 4.2 | 7.0 | 5.7 | 5.8 |
| COOH (equivalent/ton) | 23 | 23 | 27 | 25 | 28 | 22 | 25 | 24 | 15 | 35 |
| Polymer color tone | ○ | ○ | ○ | ○ | ○ | × | ○ | × | × | ○ |
| Spinnability | ○ | × | × | ○ | × | ○ | × | × | ○ | × |
| Exhaustion dyeing property | × | ◎ | ○ | ◎ | Δ | ○ | Δ | ◎ | ◎ | ○ |
| Light fastness | ◎ | ○ | ◎ | × | ◎ | × | ◎ | × | ◎ | ○ |

[Examples 15 to 17]

Polyesters were prepared through the polycondensation reaction in substantially the same manner as in Example 1, except that the intrinsic viscosity ratios thereof were adjusted to values shown in Table 3. The results of the spinnability evaluation of the polyesters thus prepared are shown in Table 3.

[Example 18]

A slurry of terephthalic acid and ethylene glycol was prepared, and transferred to an esterification tank, in which an esterification reaction was allowed to proceed to provide a prepolymer having an esterification ratio of 96.5%. After the prepolymer was transferred to a polymerization tank, 2.5 mol% of SIPE based on the total of dicarboxylic acid components and 3 wt% of a polyethylene glycol having a molecular weight of 200 based on the weight of a polyester were added to the prepolymer, and a polyester was prepared through a polycondensation reaction. The intrinsic viscosity ratio and the result of the spinnability evaluation of the polyester thus prepared are shown in Table 3.

[Table 3]

| Example | Polymerization method | Intrinsic viscosity ratio | Spinnability |
|---|---|---|---|
| 15 | Direct continuous polymerization | 1.03 | Δ |
| 16 | Direct continuous polymerization | 1.02 | ○ |
| 17 | Direct continuous polymerization | 1.008 | ○ |
| 18 | Direct batch polymerization | 1.01 | Δ |

[Examples 19 to 22]

Polyesters each having a melt viscosity as shown in the following Table 4 as measured at 280˚C by a capillary viscometer were prepared through a polycondensation reaction by a direct continuous polymerization method as in Example 1. Then, normal-pressure cation-dyeable filaments were prepared from the respective polyesters thus prepared in the same manner as in Example 1. The MI, the spinnability, the high multi-filament spinnability and the profile filament spinnability of each of the polyesters and the breaking strength and the filament breaking strength evaluation of each of the normal-pressure cation-dyeable filaments are shown in Table 4.

[Table 4]

| | Example | | | |
|---|---|---|---|---|
| | 19 | 20 | 21 | 22 |
| Melt viscosity | 300 | 270 | 230 | 200 |
| MI | 1.5 | 1.8 | 3.0 | 3.2 |
| Spinnability | Δ | ○ | ○ | ○ |
| High multi-filament spinnability | Δ | ○ | ○ | ○ |
| Profile filament spinnability | Δ | ○ | ○ | ○ |
| Breaking strength (cN/dtex) | 3.4 | 3.3 | 3.1 | 2.5 |
| Filament breaking strength evaluation | ○ | ○ | ○ | Δ |

Example 19 had a higher breaking strength of 3.4 cN/dtex, but was poorer in spinnability than Example 1. Examples 20 and 21 had higher breaking strengths of 3.3 cN/dtex and 3. 1 cN/dtex, respectively, and were excellent in spinnability. Example 22 had a lower breaking strength of 2.5 cN/dtex, and a fabric produced from the filaments of Example 22 was poorer in friction strength and more susceptible to pilling than Example 1.

Examples 19 to 22 were satisfactory in exhaustion dyeing percentage and light fastness which were measured in the same manner as in Example 1.

INDUSTRIAL APPLICABILITY

The inventive normal-pressure cation-dyeable polyester is stable in quality, and can be efficiently produced at lower costs. The polyester can be easily dyed with a cationic dye at a normal pressure at a temperature not higher than 100˚C without a carrier, and is excellent in dark- and pale-color light fastness. The polyester can be melt-spun and post-treated with excellent operability under conditions close to those employed for an ordinary polyethylene terephthalate. Therefore, even if fibers of the inventive polyester are dyed after having been coknitted or cowoven with natural fibers, urethane fibers or the like for swimming wear andunderwearapplications, highqualitytextileproducts can be provided without deterioration of the natural fibers and the urethane fibers.

**Claims**

1.   A normal-pressure cation-dyeable polyester comprising:

ethylene terephthalate as a major recurring unit;
2.0 to 3.0 mol% of an isophthalic acid component having a metal sulfonate group based on the total of acid components present in the polyester; and
not less than 1.5 wt% and less than 4.0 wt% of a polyalkylene glycol having an average molecular weight of 150 to 400 based on the weight of the polyester,
wherein diethylene glycol is present in a proportion of 4.5 to 6.5 mol% based on the total of glycol components,
wherein a terminal carboxyl group concentration is 20 to 30 equivalents/ton,
wherein the polyester has a melt index of 1.8 to 3.0 g/10 min at 290˚C.

2.   A normal-pressure cation-dyeable polyester as set forth in claim 1, which has a ratio of a maximum value $[\eta]$ max to a minimum value $[\eta]$ min of an intrinsic viscosity satisfying $1.0 \leq [\eta]max/[\eta]min \leq 1.02$.

3.   A textile product comprising a normal-pressure cation-dyeable polyester as recited in claim 1 or 2.

4.   A continuous production method for continuously producing a normal-pressure cation-dyeable polyester according to claim 1 through a direct esterification reaction and polycondensation by employing terephthalic acid, ethylene glycol, an isophthalic acid component having a metal sulfonate group and a polyalkylene glycol as ingredients, the method comprising the steps of:

slurrying dicarboxylic acid components including the terephthalic acid and the metal-sulfonate-group-containing isophthalic acid and the ethylene glycol, adjusting pH of the resulting slurry to 4.5 to 5.5, and continuously supplying the slurry into a first esterification tank;

controlling an in-tank molar ratio of the ethylene glycol to the dicarboxylic acid components to 0.9 to 1.1 to provide an oligomer having an esterification ratio of 80 to 90%, and continuously supplying the oligomer into a second esterification tank;

continuously adding the polyalkylene glycol, and controlling the in-tank molar ratio to 1.1 to 1.2 to cause an esterification reaction; and

sequentially introducing the resulting product into a polymerization tank, and causing a polymerization reaction at a reduced pressure.

**5.** A normal-pressure cation-dyeable polyester continuous production method as set forth in claim 4, wherein a series of lot changes is continuously made without interruption of the steps.

**Patentansprüche**

**1.** Bei Normaldruck Kationen-färbbarer Polyester, umfassend:

Etyhlenterephtalat als hauptsächliche wiederkehrende Einheit;

2,0 bis 3,0 Mol-% eines Isophtalsäure-Bestandteils mit einer Metallsulfonatgruppe, basierend auf den gesamten, in dem Polyester vorliegenden Säurebestandteilen; und

nicht weniger als 1,5 Gew.-% und weniger als 4 Gew.-% eines Polyalkylenglycols mit einem durchschnittlichen Molekulargewicht von 150 bis 400, basierend auf dem Gewicht des Polyesters,

wobei Diethylenglycol in einem Anteil von 4,5 bis 6,5 Mol-%, basierend auf der Gesamtheit der Glycolbestandteile vorliegt,

wobei die endständige Carboxylgruppen-Konzentration 20 bis 30 Äquivalente/Tonne beträgt, und

wobei der Polyester einen Schmelzindex von 1,8 bis 3,0 g/10 min bei 290˚C aufweist.

**2.** Bei Normaldruck Kationen-färbbarer Polyester nach Anspruch 1, welcher ein Verhältnis des Maximalwerts $[\eta]$max zu dem Minimalwert $[\eta]$min der intrinsischen Viskosität aufweist, das $1{,}0 \leq [\eta]$max $/[\eta]$min $\leq 1{,}02$ erfüllt.

**3.** Textilprodukt, umfassend einen bei Normaldruck Kationen-färbbaren Polyester nach Anspruch 1 oder 2.

**4.** Kontinuierliches Herstellungsverfahren zum fortlaufenden Herstellen eines bei Normaldruck Kationen-färbbaren Polyesters nach Anspruch 1 durch eine direkte Veresterungsreaktion und Polykondensation, indem Terephatalsäure, Ethylenglycol, ein Isophtalsäure-Bestandteil mit einer Metallsulfonatgruppe und ein Polyethylenglycol als Inhaltstoffe eingesetzt werden, wobei das Verfahren die folgenden Schritte umfasst:

Aufschlämmen der Dicarbonsäure-Bestandteile einschließlich der Terephtalsäure und der Metallsulfonatgruppen haltigen Isophtalsäure und des Ethylenglycols, Einstellen des pHs der resultierenden Schlämme auf 4,5 bis 5,5, und kontinuierliches Zuführen der Schlämme in einen ersten Veresterungsbehälter;

Steuern des in dem Behälter vorliegenden molaren Verhältnisses des Ethylenglycols zu den Dicarbonsäure-Bestandteilen auf 0,9 bis 1,1, um ein Oligomer mit einer Veresterungsrate von 80 bis 90 % bereitzustellen, und kontinuierliches Zuführen des Oligomers in einen zweiten Veresterungsbehälter; kontinuierliche Zugabe des Polyalkylenglycols, und

Steuern des in dem Behälter vorliegenden molaren Verhältnisses auf 1,1 bis 1,2, um die Veresterungsreaktion hervorzurufen; und

nachfolgend Einführen des resultierenden Produkts in einen Polymerisationsbehälter und Bewirken der Polymerisationsreaktion bei verringertem Druck.

**5.** Kontinuierliches Herstellungsverfahren für einen bei Normaldruck Kationen-färbbaren Polyester nach Anspruch 4, wobei eine Reihe von Chargen-Veränderungen kontinuierlich, ohne Unterbrechung der Schritte, durchgeführt wird.

**Revendications**

**1.** Polyester pouvant être teint par des cations sous pression ordinaire, qui comprend :

du téréphtalate d'éthylène en tant qu'unité répétée principale ;

de 2,0 à 3,0 % en moles d'un composant acide isophtalique ayant un groupe sulfonate de métal par rapport à la totalité des composants acides présents dans le polyester ; et

pas moins de 1,5 % en poids, mais moins de 4,0 % en poids d'un polyalkylène glycol ayant une masse moléculaire moyenne de 150 à 400 par rapport au poids du polyester,

le diéthylène glycol étant présent en une proportion de 4,5 à 6,5 % en moles par rapport à la totalité des composants glycol,

une concentration en groupes carboxyle terminaux étant de 20 à 30 équivalents/tonne,

le polyester ayant un indice de fusion de 1,8 à 3,0 g/10 minutes à 290 ˚C.

2. Polyester pouvant être teint par des cations sous pression ordinaire selon la revendication 1, qui a un rapport d'une valeur maximale [η]max sur une valeur minimale [η]mit d'une viscosité intrinsèque satisfaisant à $1,0 \leq [η]max/[η]min \leq 1,02$.

3. Produit textile comprenant un polyester pouvant être teint par des cations sous pression ordinaire selon la revendication 1 ou 2.

4. Procédé de production continue destiné à produire en continu un polyester pouvant être teint par des cations sous pression ordinaire selon la revendication 1 par une réaction d'estérification directe et par polycondensation en utilisant de l'acide téréphtalique, de l'éthylène glycol, un composant acide isophtalique ayant un groupe sulfonate de métal et un polyalkylène glycol en tant qu'ingrédients, le procédé comprenant les étapes consistant à :

mettre en suspension les composants acide dicarboxylique comprenant l'acide téréphtalique et l'acide isophtalique contenant un groupe sulfonate de métal et l'éthylène glycol, ajuster le pH de la suspension obtenue à 4,5 à 5,5, et alimenter en continu une première cuve d'estérification en suspension ;

maintenir un rapport molaire, à l'intérieur de la cuve, de l'éthylène glycol sur les composants acide dicarboxylique à 0,9 à 1,1 pour fournir un oligomère ayant un taux d'estérification de 80 à 90 % et alimenter en continu une seconde cuve d'estérification en oligomère ;

ajouter en continu le polyalkylène glycol et maintenir le rapport molaire à l'intérieur de la cuve à 1,1 à 1,2 pour provoquer une réaction d'estérification ; et

introduire séquentiellement le produit résultant dans une cuve de polymérisation et provoquer une réaction de polymérisation à pression réduite.

5. Procédé de production continue de polyester pouvant être teint par des cations sous pression ordinaire selon la revendication 4, une série de modifications de lot étant apportées en continu sans interruption des étapes.

F i g . 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SH034195910497 B
- JP SH0631988256716 B
- JP SH062198789725 B
- JP SH058198345971 A
- JP SH0621987146921 B
- JP 2002284863 A